# EUROPÄISCHE PATENTSCHRIFT

(11) **EP 3 248 698 B1**
(45) Veröffentlichungstag und Bekanntmachung des Hinweises auf die Patenterteilung: **04.12.2019**
(21) Anmeldenummer: 17167237.1
(22) Anmeldetag: 20.04.2017
(51) Int. Cl.: B08B 9/032, A01K 9/00, B08B 9/093

(54) **VORRICHTUNG ZUR REINIGUNG VONMIT EINEM SAUGER VERSEHENEN TRÄNKEIMERN**
DEVICE FOR CLEANING FEEDING BUCKETS EQUIPPPED WITH A TEAT MEMBER
DISPOSITIF DE NETTOYAGE DE SEAUX ABREUVOIRS ÉQUIPPÉS D'UN MAMELON

(30) Priorität: 04.05.2016 DE 102016108383
(43) Veröffentlichungstag der Anmeldung: 29.11.2017
(73) Patentinhaber: Miller, Norbert, 89257 Illertissen (DE)
(72) Erfinder: Miller, Norbert, 89257 Illertissen (DE)
(74) Vertreter: Wiese, Gerhard

(56) Entgegenhaltungen:
- DE-C1- 19 957 969
- DE-U1- 29 805 682
- DE-U1-202012 100 192
- US-A- 662 384

## Beschreibung

Die Erfindung betrifft eine Vorrichtung zur Reinigung von mit einem Sauger versehenen Tränkeimern gemäß dem Oberbegriff des Patentanspruchs 1 oder von Kälbertränkautomaten.

Aus der DE 20 2012 100 192 U1 ist eine derartige Vorrichtung bekannt, bei der ein oder mehrere Tränkeimer für Kälber mittels einer Spülflüssigkeit gereinigt werden. Die an den Tränkeimern angebrachten Sauger werden bei dieser Vorrichtung in einen an der Vorrichtung angeordneten Reinigungsbecher eingeführt, der mit einer Saugleitung für den Abtransport der Spülflüssigkeit verbunden ist. Problematisch für die Gesundheit der Kälber ist es, wenn in den Saugern Milchreste oder Reste des angerührten Milchpulvers oder der mit Chemikalien versehenen Reinigungsmittel oder Spülflüssigkeiten verbleiben.

Aus der DE 199 57 969 C1 ist eine Vorrichtung mit Saugnuckeln zum automatischen Tränken von Vieh bekannt. Zur Reinigung der Saugnuckel werden diese nach oben geschwenkt und von einem Verteilkopf mit einer Ausnehmung aufgenommen, der für das Verteilen der Reinigungsflüssigkeit vorgesehen ist.

Aufgabe der Erfindung ist es, eine Vorrichtung zur Reinigung von mit einem Sauger versehenen Tränkeimern bereitzustellen, mittels der auf einfache Weise eine verbesserte Reinigung der Tränkeimer und insbesondere auch der Sauger möglich ist.

Diese Aufgabe wird durch den Gegenstand des Anspruch1 gelöst. Vorteilhafte Ausgestaltungen der Erfindung sind in den Unteransprüchen angegeben.

Erfindungsgemäß ist eine Vorrichtung zur Reinigung von Tränkeimern vorgesehen, die eine Zusatzeinrichtung für eine zeitweise mechanische Komprimierung der Sauger aufweist, um mittels dieser im Sauger befindliche Reinigungs- und/oder Spülflüssigkeit in Richtung der Saugeröffnung aus dem Sauger zu drücken.

Die Zusatzeinrichtung weist wenigstens eine drehbar gelagerte Nockenwelle mit wenigstens einem Nocken oder einer Rolle auf, mittels denen der Sauger mechanisch komprimierbar ist.

Besonders vorteilhaft ist die Nockenwelle derart angeordnet, dass der Sauger mittels des Nockens in Richtung vom Tränkeimer weg sukzessive mechanisch komprimierbar ist. Dadurch wird die restliche, im Sauger befindliche Spülflüssigkeit sauber zur Saugeröffnung hin hinaus befördert. Reste von Milch oder aufgelöstem Milchpulver, die zu einer Verkäsung oder zur Schimmelbildung im Sauger führen könnten, werden dadurch einwandfrei beseitigt.

Die Zusatzeinrichtung weist im einfachen Falle ein festes, bewegbares oder federndes, auf der anderen Seite des Saugers angeordnetes Widerlager auf, an dem sich der Sauger während des Komprimierens durch den Nocken abstützt.

Gemäß einer weiteren, nicht bildlich dargestellten Alternative kann das Widerlager jedoch auch von wenigstens einem weiteren Nocken gebildet werden, der an wenigstens einer parallel zur ersten Nockenwelle gegenüberliegend zu dieser auf der anderen Seite des Saugers angeordneten weiteren Nockenwelle angeordnet ist und der den Sauger synchron zum ersten Nocken auf der ersten Nockenwelle oder geringfügig axial versetzt zu diesem mit komprimiert. Die Nocken sind bevorzugt mit Rollen versehen, damit die Sauger beim Ausquetschen einer weniger Abrieb verursachenden Rollreibung anstelle einer Gleitreibung ausgesetzt sind.

In einer bevorzugten Ausführungsform weist die Vorrichtung mehrere voneinander beabstandete Halterungen zur gleichzeitigen Aufnahme mehrerer Tränkeimer auf. Dadurch kann bei größeren Milchbetrieben parallel eine größere Anzahl von Tränkeimern gereinigt werden.

Die wenigstens eine Halterung zur Fixierung der Tränkeimer ist bevorzugt an einer im Gehäuse schwenkbar gelagerten Schwenkvorrichtung angeordnet, mittels der der wenigstens eine Tränkeimer aus einer ersten Position in wenigstens eine zweite Position schwenkbar ist. Die erste Position ist dabei beispielsweise eine erste Reinigungs- oder Spülposition, in der im ersten Arbeitsschritt bei mit ihrer Öffnung bevorzugt schräg nach unten geneigten Tränkeimern zunächst unter Druck bevorzugt lauwarmes Wasser für eine Grobreinigung bzw. einen Vorspülprozess in den Tränkeimer und den Sauger gesprüht wird. Anschließend wird in einem zweiten Arbeitsschritt in einer zweiten Reinigungsposition bei mit ihrer Öffnung bevorzugt schräg nach oben geneigten Tränkeimern ein erstes Reinigungsmittel bzw. ein mit einem ersten Reinigungsmittel versetztes, bevorzugt erwärmtes Wasser in den Tränkeimer gesprüht, wobei sich der am Tränkeimer angeordnete Sauger in einer nach unten geneigten Position mit Reinigungsflüssigkeit füllt. Der Sauger wird mittels der Zusatzeinrichtung in der zweiten Reinigungsposition kontinuierlich oder in zeitlichen Intervallen von beispielsweise 10 Sekunden und nach Zurückschwenken in die erste Reinigungsposition vor dem Trocknen abschließend durch die Zusatzeinrichtung mechanisch ausgequetscht und dadurch vollständig von allen Rückständen befreit.

Der Wechsel zwischen den vorstehend beschriebenen Arbeitsschritten bzw. den Reinigungspositionen erfolgt während eines Reinigungsvorgangs bevorzugt mehrfach, wobei insgesamt zumindest die derzeit für eine einwandfreie hygienische Reinigung vorgeschriebene Reinigungszeit von 10 Minuten eingehalten wird. Mittels eines Steuergeräts, durch das alle Pumpen und Ventile und die Antriebe der Schwenkvorrichtung, der Zusatzeinrichtung und optional eines Antriebs zum Öffnen und Schließen des Gehäuses angesteuert werden, sind auch mehrere in einem Speicher des Steuergeräts gespeicherte Reinigungsprogramme durchführbar. Bevorzugt wird auch bei verschiedenen Reinigungsvorgängen zwischen einem ersten alkalischen, Fett lösenden Reinigungsmittel und einem zweiten sauren, Kalk lösenden und desinfizierenden Reinigungsmittel abgewechselt, die in wenigstens zwei Behältern bevorratet und mittels vom Steuergerät angesteuerter Dosierpumpen dem für den Reinigungsvorgang zugeführten Warm- oder Kaltwasser in der erforderlichen Menge hinzugefügt wird. Es sind anstelle zweier verschiedener alkalischer oder saurer Reinigungsmittel auch Einphasen-Reinigungsmittel verwendbar.

Nach Abschluss eines Reinigungsvorgangs schwenkt die Schwenkvorrichtung die Tränkeimer in die erste Reinigungsposition zurück, die dann als Trockenposition dient, in der bei schräg nach unten geschwenkter Öffnung des Tränkeimers noch im Tränkeimer verbliebenes Spülmittel, insbesondere klares Wasser, durch die Schwerkraft nach unten ablaufen kann, während gleichzeitig die Sauger mittels der Zusatzeinrichtung ausgequetscht werden. In dieser Phase kann optional zusätzlich eine Trocknung, beispielsweise durch Einblasen von Warmluft und/oder durch eine Einwirkung einer Heizung erfolgen.

In einer besonders vorteilhaften Ausführungsform weist die Nockenwelle axial voneinander beabstandet mehrere Nocken auf, mittels derer die Sauger mehrerer hintereinander angeordneter Tränkeimer komprimierbar sind. Besonders bevorzugt sind die mehreren Nocken in Umfangsrichtung versetzt zueinander auf der Nockenwelle angeordnet, so dass diese nicht gleichzeitig, sondern nacheinander auf den ihnen zugeordneten Sauger auftreffen. Das für den Antrieb der Nockenwelle erforderliche Drehmoment kann dadurch geringer gehalten und der Antriebsmotor entsprechend kleiner dimensioniert werden.

Die erfindungsgemäße Vorrichtung weist bevorzugt ein Gehäuse mit einem Gehäuseunterteil und einem schwenkbar an diesem gelagerten Gehäuseoberteil auf, wobei das Gehäuseoberteil nach Art eines Deckels zum Öffnen des Gehäuses und zum Einhängen der Tränkeimer in die Halterungen bzw. zu deren Entnahme im gereinigten Zustand aufklappbar ist. Das Gehäuseoberteil ist bevorzugt mit einer Verriegelung versehen, die vom Steuergerät erst nach Beendigung eines Reinigungsvorgangs freigegeben wird. Optional kann das Gehäuseoberteil auch mittels eines Antriebs geöffnet und geschlossen werden.

Nachfolgend werden Ausführungsbeispiele der Erfindung unter Bezugnahme auf die Zeichnungen näher erläutert. Es zeigt:
- Fig. 1: einen schematischen Querschnitt durch eine geschlossene Vorrichtung in einer zweiten Reinigungsposition mit Darstellung eines Schwenkantriebs;
- Fig. 2: einen schematischen Querschnitt durch die geschlossene Vorrichtung gemäß Fig. 1 während des Reinigungsvorgangs;
- Fig. 3: einen schematischen Querschnitt durch die geöffnete Vorrichtung gemäß Fig. 1 in einer ersten Reinigungsposition;
- Fig. 4: eine vergrößerte Darstellung einer Zusatzeinrichtung beim Ausquetschen eines Saugers;
- Fig. 5: einen schematischen Längsschnitt durch die Vorrichtung mit vier nebeneinander angeordneten Tränkeimern ;
- Fig. 6: eine vergrößerte schematische Seitenansicht einer einen Teil der Zusatzvorrichtung bildenden Nockenwelle; und
- Fig. 7: eine schematische Darstellung einer Halterung für einen Tränkeimer.

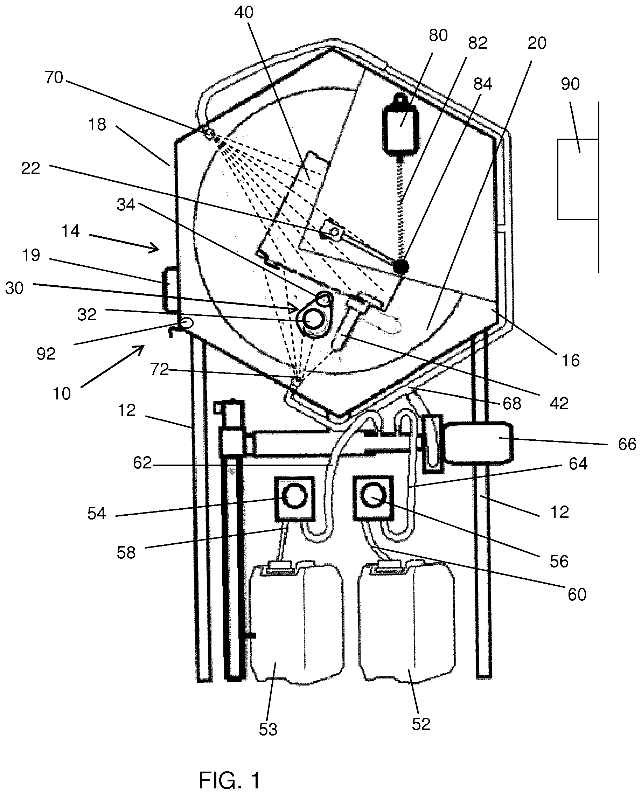

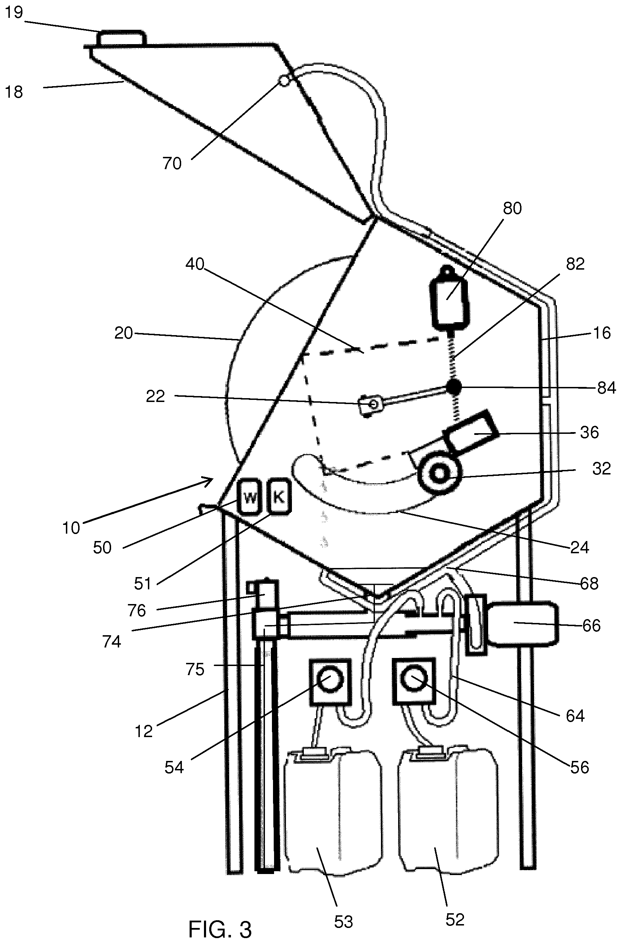

Fig. 1 zeigt einen Querschnitt durch eine geschlossene Vorrichtung 10 zum Reinigen von Tränkeimern 40. Die Vorrichtung 10 weist ein Gehäuse 14 auf, das auf einem Gestell 12 gelagert ist. Das Gehäuse 14 wird gebildet von einem Gehäuseunterteil 16 und einem deckelförmigen Gehäuseoberteil 18. Das deckelförmige Gehäuseoberteil 18 ist in Figur 3 in geöffnetem Zustand gut erkennbar.

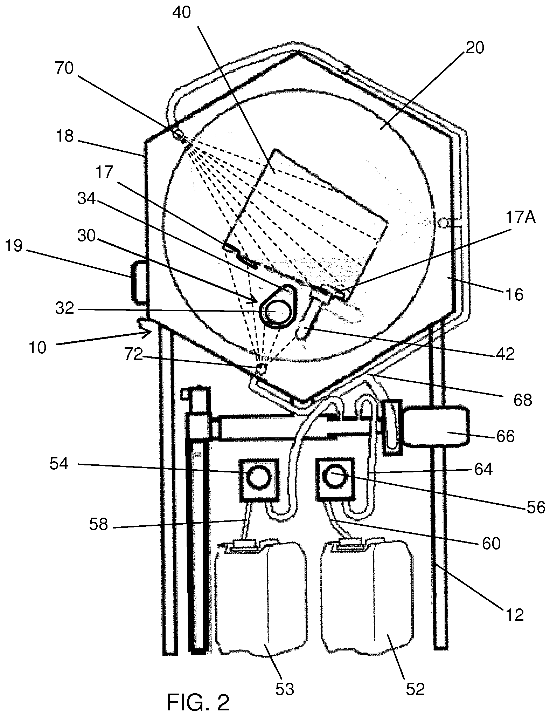

Im Gehäuse 14 ist eine Schwenkvorrichtung 20 um eine Schwenkachse 22 drehbar gelagert. Die Schwenkvorrichtung 20 ist mittels eines in Figur 1 dargestellten Antriebs 80 aus einer in Figur 3 dargestellten ersten Schwenkposition in eine in den Figuren 1 und 2 dargestellte zweite Schwenkposition schwenkbar. Die Schwenkbewegung wird vom Antrieb 80 über ein beispielhaft von einer Spindel oder einer Zahnstange gebildetes Antriebsmittel 82 auf eine Anlenkung 84 übertragen.

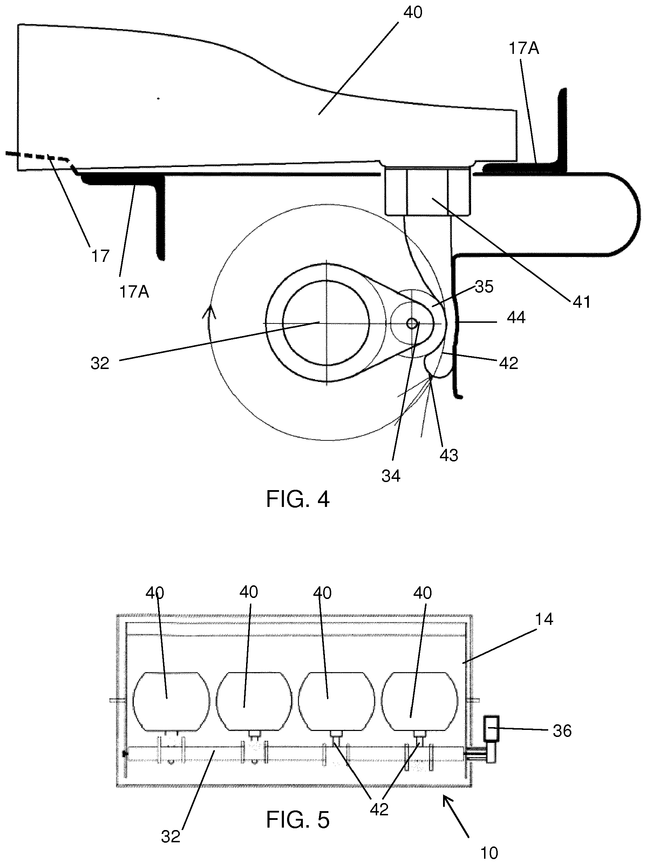

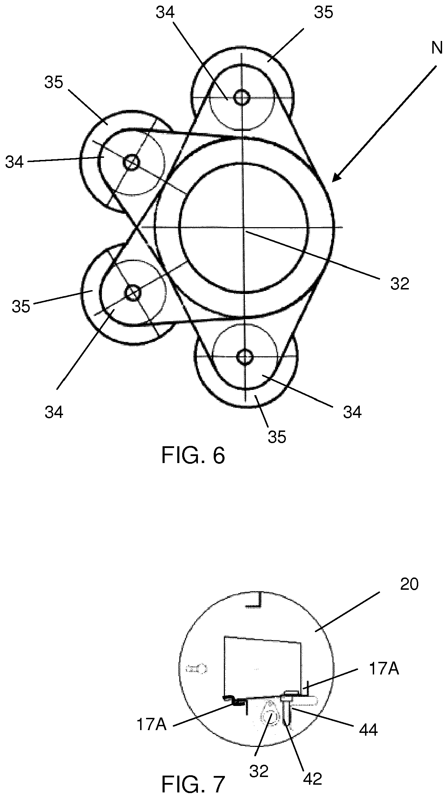

Die Tränkeimer 40 werden mittels an ihnen ohnehin standardmäßig vorgesehener Ösen an Halterungen 17 bzw. 17 A (gebildet von Haken bzw. Tragwinkeln, siehe Figur 2 und Figur 4) an der Schwenkvorrichtung 20 eingehängt. Zum Bestücken der Vorrichtung 10 mit Tränkeimern 40 bzw. zur Entnahme der gereinigten Tränkeimer 40 wird das deckelförmige Gehäuseoberteil 18 mittels eines Handgriffs 19 nach oben geschwenkt (Figur 3). Alternativ ist auch eine Öffnung des deckelförmigen Gehäuseoberteils 18 mittels eines nicht dargestellten, beispielsweise elektrischen oder pneumatischen Antriebs möglich. Eine Nockenwelle 32 einer weiter unten beschriebenen Zusatzeinrichtung 30 befindet sich beim Bestücken der Vorrichtung 10 mit Tränkeimern 40 bzw. zur Entnahme der gereinigten Tränkeimer 40 in einer in Figur 6 dargestellten Neutralstellung N.

Unterhalb des Gehäuses 14 sind im Gestell 12 wenigstens zwei Behälter 52 bzw. 53 vorgesehen, von denen der Behälter 52 mit einem alkalischen Reinigungsmittel und der Behälter 53 mit einem sauren Reinigungsmittel versehen ist. Bei Verwendung eines Einphasen-Reinigungsmittel genügt ein einziger Behälter. Der Behälter 53 steht über eine Leitung 58 mit einer Dosierpumpe 54 in Verbindung. Die Dosierpumpe 54 fördert das saure Reinigungsmittel in einer einstellbaren Menge über eine Leitung 62 zur Mischung mit dem für die Reinigung über eine Warmwasserzufuhr 50 und/oder eine Kaltwasserzufuhr 51 (Fig. 3) zugeführten Wasser in den Ansaugbereich einer Spülpumpe 66, die wie die Dosierpumpe 54 ebenfalls unterhalb des Gehäuses 14 am Gestell 12 gelagert ist.

Der Behälter 52 steht über eine Leitung 60 mit einer weiteren Dosierpumpe 56 in Verbindung. Die Dosierpumpe 56 fördert ein alkalisches Reinigungsmittel aus dem Behälter 52 zur Mischung mit dem für die Reinigung über die Warmwasserzufuhr 50 und/oder die Kaltwasserzufuhr 51 zugeführten Wasser über eine Leitung 64 ebenfalls in den Ansaugbereich der Spülpumpe 66. Die Dosierpumpe 56 ist ebenfalls unterhalb des Gehäuses 14 am Gestell 12 gelagert.

Mittels der Spülpumpe 66 wird das mit Warm- oder Kaltwasser gemischte saure oder alkalische Reinigungsmittel über eine Druckleitung 68 zu Düsen 70 bzw. 72 gefördert, die an der Innenseite des Gehäuses 14 angeordnet sind. Im Ausführungsbeispiel sind lediglich zwei Düsen 70 bzw. 72 gezeigt, von denen die Düse 70 am Gehäuseoberteil 18 und die Düse 72 am Gehäuseunterteil 16 befestigt ist. Es versteht sich für den Fachmann, dass bei Bedarf weitere Düsen auf der Innenseite des Gehäuses 14 angeordnet sein können.

Für einen Reinigungsvorgang werden die Tränkeimer 40 bei geöffnetem Gehäuseoberteil 18 (Figur 3) in die Halterungen 17 bzw. 17 A eingehängt. Dann wird das Gehäuseoberteil 18 geschlossen und in einer ersten Reinigungsposition gemäß Fig. 3, bei der die Tränkeimer 40 mit ihrer Öffnung schräg nach unten weisen, über die Spülpume 68 und die Düsen 70 und 72 bevorzugt lauwarmes Wasser in und auf die Tränkeimer 40 und in und auf die mittels eines Schraubanschlusses 41 außen an diesen befestigten Sauger 42 gespritzt. Nach einem ersten Zeitintervall wird die Schwenkvorrichtung 20 mittels des Antriebs 36 in eine zweite Reinigungsposition gemäß den Figuren 1 und 2 geschwenkt, bei der die Öffnung der Tränkeimer schräg nach oben weist. Hierbei füllen sich auch die Sauger 42 mit Wasser bzw. Reinigungsmittel und werden bevorzugt in Intervallen von beispielsweise 10 Sekunden mittels einer Zusatzeinrichtung 30 in Richtung zur Saugeröffnung 43 hin deformiert und dabei von innen nach außen ausgequetscht. Beim anschließenden Zurückschwenken in die erste Reinigungsposition gemäß Fig. 3 entleeren sich die Tränkeimer 40 und die Sauger 42 werden mittels der Zusatzeinrichtung 30 weiterhin in Richtung zur Saugeröffnung 43 hin deformiert und dabei von innen nach außen ausgequetscht. Damit ist ein Vorspülprozess für eine Grobreinigung mit klarem Wasser abgeschlossen.

Beim anschließenden Reinigungsvorgang wird über die Dosierpumpe 56 dem Wasser ein alkalisches Reinigungsmittel zu dosiert, mittels dem besonders gut fettige Rückstände im Tränkeimer und im Sauger 42 beseitigt werden können. Auch bei diesem Reinigungsvorgang erfolgt zumindest einmal ein Wechsel zwischen der ersten Reinigungsposition gemäß Fig. 3 und der zweiten Reinigungsposition gemäß Fig. 1 oder 2 und ein anschließendes Zurückschwenken in die erste Reinigungsposition, jeweils mit einem gleichzeitigen Ausquetschen der Sauger 42 mittels der Zusatzeinrichtung 30, welches kontinuierlich oder in zeitlichen Intervallen erfolgen kann. Als Intervall ist beispielsweise ein Betrieb der Zusatzeinrichtung 30 in Abständen von etwa 10 Sekunden möglich.

In einem weiteren Reinigungsvorgang, der sich unmittelbar anschließen kann, aber auch wechselweise erst im Abstand von etwa 12 Stunden bei einer nächsten Reinigung der Tränkeimer 40 vorgesehen sein kann, wird dann dem Wasser mittels der Dosierpumpe 54 ein saures Reinigungsmittel aus dem Behälter 53 zu dosiert, mittels dem Kalkrückstände und jede Art von Keimen besonders gut entfernbar sind. Auch hierbei erfolgt mindestens einmal, bevorzugt mehrmals ein Wechsel zwischen der ersten Reinigungsposition gemäß Fig. 3 und der zweiten Reinigungsposition gemäß Fig. 1 oder 2 und ein anschließendes Zurückschwenken in die erste Reinigungsposition, jeweils verbunden mit einem gleichzeitigem Ausquetschen der Sauger 42 mittels der Zusatzeinrichtung 30.

Die erfindungsgemäße Vorrichtung 10 weist eine Zusatzeinrichtung 30 auf, die im gezeigten Ausführungsbeispiel eine in Längsrichtung des Gehäuses 14 drehbar an diesem gelagerte Nockenwelle 32 und wenigstens einen, bevorzugt mehrere axial voneinander beabstandet auf der Nockenwelle 32 angeordnete Nocken 34 aufweist. Die Nockenwelle 32 ist mittels eines Antriebs 36 antreibbar (siehe Figur 3 und 5). Die Nockenwelle 32 und deren Antrieb 36 sind an der Schwenkvorrichtung 20 gelagert und mit dieser schwenkbar. Hierfür weist wenigstens eine Seitenwand des Gehäuseunterteils 16 eine in Figur 3 dargestellte bogenförmige Aussparung 24 auf.

Wie in Figur 5 dargestellt, können gleichzeitig mehrere Tränkeimer 40 in Längsrichtung des Gehäuses 14 hintereinander von der Vorrichtung 10 aufgenommen und in dieser gereinigt werden. In Figur 5 sind dies beispielhaft vier Tränkeimer 40. Es sind jedoch auch Vorrichtungen 10 mit mehr oder weniger Tränkeimern 40 von der Erfindung umfasst, die auch in mehreren Ebenen angeordnet sein können, von denen jede bevorzugt auch mit einer eigenen Zusatzeinrichtung 30 versehen ist.

Die Zusatzeinrichtung 30 mit der Nockenwelle 32 und den Nocken 34 dient dazu, die Sauger 42 bei und nach jedem Reinigungsvorgang und bei und nach jedem Spülvorgang gezielt zu deformieren bzw. sukzessive vom Schraubanschluss 41 zur Saugeröffnung 43 hin zu komprimieren und dadurch quasi von innen nach außen auszuquetschen, so dass die Sauger 42 vollständig von der noch im Inneren befindlichen Reinigungsflüssigkeit bzw. Spülflüssigkeit und damit auch von allen Rückständen und potenziellen Keimbildnern befreit werden. Dieser Vorgang ist am besten im Detail in Figur 4 zu sehen. Dabei dient in diesem Ausführungsbeispiel ein festes oder bevorzugt ein federnd nachgiebiges Widerlager 44 als Gegenhalter für den Sauger 42 während des Komprimierens und Ausquetschens durch den Nocken 34.

Die Nocken 34 können - wie in Figur 4 gezeigt - auch zusätzlich jeweils mit einer Rolle 35 versehen sein. Dadurch werden die Sauger 42 nicht durch eine Gleitreibung der Nocken 34, sondern durch eine Rollreibung der Rollen 35 beansprucht und entsprechend vor zu starkem Abrieb geschont.

Figur 6 zeigt eine Neutralstellung N der Nockenwelle 32, in der sich alle im Ausführungsbeispiel dargestellten vier Nocken 34 (bzw. die an diesen angeordneten Rollen 35) auf der linken Seite der Nockenwelle 32 befinden, während die rechte Seite der Nockenwelle 32 frei von Nocken 34 ist und in diesem Bereich beim Einhängen und beim Entnehmen der Tränkeimer 40 die Sauger 42 ungehindert in den Bereich zwischen Nockenwelle 32 und Widerlager 44 eingeführt und auch wieder aus diesem entfernt werden können.

Wie in Figur 6 dargestellt, weist die Nockenwelle 32 für die in Figur 5 dargestellte Ausführungsform mit vier Tränkeimern vier Nocken 34 mit jeweils einer Rolle 35 auf, die in Umfangsrichtung versetzt zueinander auf der Nockenwelle 32 angeordnet sind, so dass die vier Nocken 34 bzw. deren Rollen 35 nacheinander auf den ihnen zugeordneten Sauger 42 einwirken. Dadurch kann das vom Antrieb 36 aufzubringende Drehmoment geringer gehalten werden, als wenn alle vier Nocken 34 gleichzeitig in Aktion treten würden. Die Nockenwelle 32 kann bevorzugt mit einem mehrkantigen Profil, beispielsweise einem Vierkant-, Sechskant- oder Achtkantprofil gebildet sein, so dass die mit daran angepassten zentralen Durchbrüchen versehenen scheibenförmigen Nocken 34 in unterschiedlicher Winkelposition auf die Nockenwelle 32 aufgesteckt und axial auf dieser fixiert werden können.

Die Vorrichtung 10 kann auch eine nicht dargestellte Trockeneinrichtung umfassen, mittels der die Tränkeimer 40 beispielsweise durch Warmluft und/oder Wärmestrahlung schneller getrocknet werden können. Zusätzlich kann die Vorrichtung 10 auch eine nicht dargestellte Einrichtung zum Desinfizieren oder Sterilisieren der Tränkeimer 40 bzw. der Sauger 42 aufweisen.

Das verbrauchte Wasser oder mit Reinigungsmittel versetzte Wasser sammelt sich - wie in Fig. 3 angedeutet - im unteren Teil des Gehäuseunterteils 16 und wird gesteuert mittels eines Ablassventils 76 über eine Abwasserleitung 74 bzw. 75 in einen Abfluss oder in eine Wiederaufbereitungs- und/oder Wärmerückgewinnungsanlage geleitet.

Sämtliche Antriebe, Pumpen und Ventile der Vorrichtung 10 werden mittels eines in Fig. 1 dargestellten Steuergeräts 90 gesteuert, das beispielsweise an einer Wand in der Nähe der Vorrichtung 10, aber auch an einer Außenwand des Gehäuses 14 oder am Gestell 12 angeordnet sein kann. Das Steuergerät 90 ist bevorzugt auch mit einem Sensor 92 verbunden, der die Schließposition des Gehäuseoberteils 18 überwacht und eine Verriegelung des Gehäuseoberteils 18 bzw. eine Ansteuerung des Antriebs zum Aufschwenken des Gehäuseoberteils 18 entsprechend des Programmablaufs des wenigstens einen in einem Speicher des Steuergeräts gespeicherten Reinigungsprogramms freigibt bzw. ansteuert. Das Steuergerät 90 kann auch die Leistungsaufnahme der Dosierpumpen 54 und 56 überwachen und dadurch mittelbar Rückschlüsse auf die Flüssigkeitsstände in den Behältern 52 bzw. 53 ziehen und entsprechende Meldungen an den Benutzer auf einem Display anzeigen (z.B. "Achtung! Behälter 1 auffüllen!").

Die Zusatzeinrichtung 30 kann auch von einem nicht dargestellten optional auch mehrteiligen Ausstreifer gebildet werden, der sich nahe des Schraubanschlusses 41 um den Sauger 42 legt, der diesen in radialer Richtung komprimiert und anschließend in einer Linearbewegung zur Saugeröffnung 43 hin bewegt wird.

### Bezugszeichenliste

- 10: Vorrichtung
- 12: Gestell
- 14: Gehäuse
- 16: Gehäuse-Unterteil
- 17: Halterung
- 17A: Halterung (Tragwinkel)
- 18: Gehäuse-Oberteil
- 19: Handgriff
- 20: Schwenkvorrichtung
- 22: Schwenkachse
- 24: Aussparung
- 30: Zusatzeinrichtung
- 32: Nockenwelle
- 34: Nocken
- 35: Rolle
- 36: Antrieb (von 32)
- 40: Tränkeimer
- 41: Schraubanschluss
- 42: Sauger
- 43: Saugeröffnung
- 44: Widerlager
- 50: Warmwasserzufuhr
- 51: Kaltwasserzufuhr
- 52: Behälter (erstes Reinigungsmittel)
- 53: Behälter (zweites Reinigungsmittel)
- 54: Dosierpumpe (an 53)
- 56: Dosierpumpe (an 52)
- 58: Leitung

- 60: Leitung
- 62: Leitung
- 64: Leitung
- 66: Spülpumpe
- 68: Druckleitung
- 70: Düse
- 72: Düse
- 74: Abwasserleitung
- 75: Abwasserleitung
- 76: Ablassventil
- 80: Antrieb (von 20)
- 82: Antriebsmittel
- 84: Anlenkung
- 90: Steuergerät
- 92: Sensor
- N: Neutralstellung (von 32)

## Patentansprüche

1. Vorrichtung (10) zur Reinigung von mit einem Sauger (42) versehenen Tränkeimern (40), aufweisend:
- ein Gehäuse (14) mit wenigstens einer Halterung (17; 17A) zur Halterung wenigstens eines mit einem Sauger (42) versehenen Tränkeimers (40),
- mit wenigstens einer Düse (70; 72) zum Einspritzen einer Reinigungs- und/oder Spülflüssigkeit in das Gehäuse (14),
mit wenigstens einer Zusatzeinrichtung (30) zum zumindest zeitweisen mechanischen Komprimieren des Saugers (42),
- **dadurch gekennzeichnet, dass** die Zusatzeinrichtung (30) wenigstens eine drehbar gelagerte Nockenwelle (32) mit wenigstens einem Nocken (34) und/oder einer Rolle (35) umfasst, mittels derer der Sauger (42) komprimierbar ist.

2. Vorrichtung (10) nach Anspruch 1, **dadurch gekennzeichnet,**
**dass** die Nockenwelle (32) derart angeordnet ist, dass der Sauger (42) mittels des Nockens (34) und/oder der Rolle (35) in Richtung vom Tränkeimer (40) weg zu einer Saugeröffnung (43) hin sukzessive mechanisch komprimierbar ist.

3. Vorrichtung (10) nach einem der Ansprüche 1 oder 2, **dadurch gekennzeichnet, dass** die Zusatzeinrichtung (30) ein dem Nocken (34) und/oder der Rolle (35) entgegen wirkendes, auf der anderen Seite des Saugers (42) angeordnetes festes, federndes oder bewegbares Widerlager (44) aufweist.

4. Vorrichtung (10) nach Anspruch 3, **dadurch gekennzeichnet,**
**dass** das Widerlager (44) von wenigstens einem weiteren Nocken (34) einer weiteren Nockenwelle (32) gebildet wird.

5. Vorrichtung (10) nach einem der vorhergehenden Ansprüche, **dadurch gekennzeichnet, dass** diese mehrere voneinander beabstandete Halterungen (17; 17A) zur Aufnahme mehrerer Tränkeimer (40) umfasst.

6. Vorrichtung (10) nach einem der vorhergehenden Ansprüche, **dadurch gekennzeichnet, dass** die wenigstens einer Halterung (17; 17A) an einer im Gehäuse (14) schwenkbar gelagerten Schwenkvorrichtung (20) angeordnet ist, mittels der der wenigstens eine Tränkeimer (40) aus einer ersten Position in wenigstens eine zweite Position schwenkbar ist.

7. Vorrichtung (10) nach einem der Ansprüche 1 bis 4, **dadurch gekennzeichnet, dass** die Nockenwelle (32) axial voneinander beabstandet mehrere Nocken (34) und/oder Rollen (35) aufweist.

8. Vorrichtung (10) nach Anspruch 7, **dadurch gekennzeichnet, dass** die mehreren Nocken (34) und/oder Rollen (35) jeweils in Umfangsrichtung versetzt zueinander auf der Nockenwelle (32) angeordnet sind.

9. Vorrichtung (10) nach einem der vorhergehenden Ansprüche, **dadurch gekennzeichnet, dass** das Gehäuse (14) ein Gehäuseunterteil (12) und ein schwenkbar an diesem gelagertes Gehäuseoberteil (18) aufweist, wobei das Gehäuseoberteil (18) nach Art eines Deckels zum Öffnen des Gehäuses und zum Einhängen der Tränkeimer (40) in die Halterungen (17; 17A) oder zu deren Entnahme aufklappbar ist.

## Claims

1. Apparatus (10) for cleaning feeding buckets (40) provided with a teat (42), comprising:
- a housing (14) having at least one holder (17; 17A) for holding at least one feeding bucket (40) provided with a teat (42),
- with at least one nozzle (70; 72) for injecting a cleaning and/or rinsing liquid into the housing (14),
with at least one additional device (30) for the at least temporary mechanical compression of the teat (42),
- **characterized in that** the additional device (30) comprises at least one rotatably mounted camshaft (32) having at least one cam (34) and/or a roller (35) by means of which the teat (42) can be compressed.

2. Apparatus (10) according to claim 1, **characterized in that** the camshaft (32) is arranged such that the teat (42) can be gradually mechanically compressed by means of the cam (34) and/or the roller (35) in the direction from the feeding bucket (40) toward a teat opening (43).

3. Apparatus (10) according to either claim 1 or claim 2, **characterized in that** the additional device (30) comprises a stationary, resilient or movable abutment (44) which is arranged on the other side of the teat (42) and counteracts the cam (34) and/or the roller (35).

4. Apparatus (10) according to claim 3, **characterized in that** the abutment (44) is formed by at least one further cam (34) of a further camshaft (32).

5. Apparatus (10) according to any of the preceding claims, **characterized in that** said apparatus comprises a plurality of mutually spaced holders (17; 17A) for receiving a plurality of feeding buckets (40).

6. Apparatus (10) according to any of the preceding claims, **characterized in that** the at least one holder (17; 17A) is arranged on a pivot apparatus (20) which is pivotally mounted in the housing (14) and by means of which the at least one feeding bucket (40) can be pivoted from a first position into at least one second position.

7. Apparatus (10) according to any of claims 1 to 4, **characterized in that** the camshaft (32) comprises a plurality of cams (34) and/or rollers (35) that are axially mutually spaced.

8. Apparatus (10) according to claim 7, **characterized in that** the plurality of cams (34) and/or rollers (35) are each arranged on the camshaft (32) so as to be offset from one another in the circumferential direction.

9. Apparatus (10) according to any of the preceding claims, **characterized in that** the housing (14) has a housing lower part (12) and a housing upper part (18) pivotally mounted on said lower part, the housing upper part (18) being hinged in the manner of a lid for opening the housing and for hanging the feeding buckets (40) in the holders (17; 17A) or for the removal of said buckets.

## Revendications

1. Dispositif (10) de nettoyage de seau d'abreuvement (40) à tétine (42), comprenant :
- un boîtier (14) comportant au moins un support (17 ; 17A) destiné à supporter au moins un seau d'abreuvement (40) à tétine (42),
- comportant au moins une buse (70 ; 72) permettant d'injecter un liquide de nettoyage et/ou de rinçage dans le boîtier (14),
- comportant au moins un accessoire (30) pour la compression mécanique au moins temporaire de la tétine (42),
- **caractérisé en ce que** l'accessoire (30) comprend au moins un arbre à cames (32) monté de façon à être rotatif, lequel arbre à cames comporte au moins une came (34) et/ou un rouleau (35) au moyen duquel la tétine (42) peut être compressée.

2. Dispositif (10) selon la revendication 1, **caractérisé en ce que** l'arbre à cames (32) est disposé de telle sorte que la tétine (42) peut être compressée mécaniquement et progressivement, au moyen de la came (34) et/ou du rouleau (35), en direction du seau d'abreuvement (40) vers une ouverture d'aspiration (43).

3. Dispositif (10) selon l'une quelconque des revendications 1 ou 2, **caractérisé en ce que** l'accessoire (30) présente une butée (44) fixe, élastique ou mobile, disposée de l'autre côté de la tétine (42) et qui agit en sens inverse de la came (34) et/ou du rouleau (35).

4. Dispositif (10) selon la revendication 3, **caractérisé en ce que** la butée (44) est constituée d'au moins une autre came (34) d'un autre arbre à cames (32).

5. Dispositif (10) selon l'une quelconque des revendications précédentes, **caractérisé en ce qu'**il comporte plusieurs supports espacés les uns des autres (17 ; 17A), destinés à recevoir plusieurs seaux d'abreuvement (40).

6. Dispositif (10) selon l'une quelconque des revendications précédentes, **caractérisé en ce que** l'au moins un support (17 ; 17A) est disposé sur un dispositif pivotant (20) monté dans le boîtier (14), au moyen duquel l'au moins un seau d'abreuvement (40) peut pivoter d'une première position vers au moins une seconde position.

7. Dispositif (10) selon l'une des revendications 1 à 4, **caractérisé en ce que** l'arbre à cames (32) présente plusieurs cames (34) et/ou rouleaux (35) espacés axialement les uns des autres.

8. Dispositif (10) selon la revendication 7, **caractérisé en ce que** la pluralité de cames (34) et/ou de rouleaux (35) sont disposés sur l'arbre à cames (32) de façon décalée les uns par rapport aux autres dans le sens circonférentiel.

9. Dispositif (10) selon l'une quelconque des revendications précédentes, **caractérisé en ce que** le boîtier (14) présente une partie inférieure de boîtier (12) et une partie supérieure de boîtier (18) montée sur le boîtier de manière pivotante, la partie supérieure de boîtier (18) étant repliable, comme un couvercle, ce qui permet d'ouvrir le boîtier et d'accrocher le seau d'abreuvement (40) aux supports (17 ; 17A), ou de les y décrocher.
